# DEMANDE DE BREVET EUROPEEN

(11) **EP 0 702 490 A1**
(43) Date de publication de la demande: **20.03.1996**
(21) Numéro de dépôt: 95202393.5
(22) Date de dépôt: 05.09.1995
(51) Int. Cl.: H04N 7/14, H04M 1/72

(54) **Téléphone sans fil muni d'un dispositif de traitement d'images et d'une caméra**

(30) Priorité: 13.09.1994 FR 9410908
(71) Demandeur: PHILIPS ELECTRONIQUE GRAND PUBLIC (Sigle: PHILIPS E.G.P.), F-92150 Suresnes (FR); PHILIPS ELECTRONICS N.V., NL-5621 BA Eindhoven (NL)
(72) Inventeur: Boursier, Alain, F-75008 Paris (FR); Giron, Louis, F-75008 Paris (FR)
(74) Mandataire: Chaffraix, Jean

(57) **Abrégé**

L'appareil comprend une base (27), reliable à une ligne téléphonique, et un combiné (28) muni de circuits de parole reliés avec la ligne téléphonique via la base.
Selon l'invention, il comprend en outre un boîtier (17 ou 28) muni d'un capteur d'images (31 ou 1) fournissant un signal d'image, avec un écran (32 ou 19) faisant écran de visée. L'utilisation du boîtier est analogue à celle d'un appareil photographique. L'image est numérisée, puis mémorisée et transmise à la base, pour être notamment transmise en télécopie.

Application : s'intègre dans la gamme des postes téléphoniques.

## Description

La présente invention concerne un appareil téléphonique, comprenant une partie pour l'émission/réception de signaux, destinée à être reliée à une ligne téléphonique, une partie, contenue dans un boîtier mobile, munie de moyens de traitement de signal audio, et communicant avec la partie destinée à être reliée à la ligne téléphonique, une partie mobile équipée d'un capteur d'images, et dans la partie destinée à être reliée à la ligne téléphonique, des moyens pour la transmission d'une image sur la ligne téléphonique.
L'invention concerne les téléphones en général, par exemple les téléphones classiques avec ou sans fil entre le combiné et la base.

Des appareils de téléphone avec transmission d'une image sur une ligne téléphonique, dits visiophones, munis d'éléments correspondant au préambule ci-dessus, sont connus par exemple du document Patent Abstracts of Japan concernant le brevet A 62091045 (NEC CORP). Il s'agit d'un visiophone qui transmet à chacun des correspondants l'image de l'autre. L'image transmise est obligatoirement de définition très limitée à cause de la bande passante elle même limitée.

Un but de l'invention est d'apporter de nouvelles possibilités à un appareil téléphonique.
A cet effet, la partie mobile équipée du capteur d'images comprend un convertisseur pour numériser le signal d'image du capteur et une mémoire d'image pour mémoriser localement au moins une image numérisée complète, et la partie destinée à être reliée à la ligne téléphonique est munie d'une liaison spécialisée avec la partie mobile équipée du capteur d'images pour la transmission différée d'une image fixe depuis la partie mobile équipée du capteur d'images vers la partie destinée à être reliée à la ligne téléphonique, et de moyens pour transmettre une telle image fixe sur la ligne téléphonique.
Ainsi la partie mobile équipée du capteur d'images peut être utilisée exactement comme un appareil photographique numérique lors de la prise de vues, puis l'image peut être transmise à un correspondant avec tous ses détails. La transmission d'une image et la transmission d'un message téléphonique sont complètement dissociées.
L'idée de base de l'invention est en quelque sorte d'accoupler un appareil photographique numérique et un téléphone de façon à pouvoir transmettre directement et facilement les clichés pris avec l'appareil photographique.
Dans une forme de réalisation avantageuse, la partie mobile équipée du capteur d'images est contenue dans un second boîtier mobile, distinct de celui qui contient la partie munie de moyens de traitement de signal audio.
Ainsi le téléphone peut être utilisé de façon habituelle par une personne, pendant qu'une autre personne utilise le capteur d'images, et peut même partir en voyage avec.
Avantageusement, la mémoire d'image de la partie mobile équipée du capteur d'images a une capacité de plusieurs images, et l'appareil est muni de moyens pour choisir une image parmi plusieurs images dans la mémoire d'image de la partie mobile équipée du capteur d'images.
Ainsi il est possible d'emmagasiner plusieurs images fixes à la suite, comme avec un appareil photographique, et de les consulter à loisir par la suite.
Dans un mode de réalisation intéressant, la partie destinée à être reliée à la ligne téléphonique est munie d'un écran et de moyens pour mémoriser et afficher sur cet écran une image fixe tirée, via la dite liaison spécialisée, de la mémoire d'image de la partie mobile équipée du capteur d'images.
Ainsi on peut contrôler et choisir l'image que l'on désire transmettre, parmi plusieurs qui ont été saisies au préalable.
Avantageusement, la partie destinée à être reliée à la ligne téléphonique est munie de moyens pour transmettre via la ligne téléphonique une image, issue de la partie mobile équipée du capteur d'images, sous la forme standard d'un message de fac-similé.
Ainsi le nombre de personnes susceptibles de recevoir une image fixe prise par la partie mobile équipée du capteur d'images est grand, du fait que, actuellement, un grand nombre de personnes sont équipées d'un récepteur de fac-similé.
La partie destinée à être reliée à la ligne téléphonique est en outre avantageusement munie de moyens pour mémoriser et afficher sur son écran une image fixe tirée, via la ligne téléphonique, de la mémoire d'image de la partie mobile, équipée du capteur d'images, d'un autre appareil téléphonique de même type.
Ainsi on dispose d'un alternative à la réception habituelle d'une image par fac-similé, à savoir l'affichage direct d'une image reçue d'un correspondant. En outre, l'appareil a des dimensions réduites par rapport à celles d'un télécopieur classique, du fait qu'il ne possède pas nécessairement des moyens pour faire défiler une feuille de papier.
Avantageusement, la partie mobile équipée du capteur d'images est munie d'un écran de visée affichant au choix, soit en temps réel l'image saisie par le capteur, soit une image issue de la mémoire.
Cet écran peut donc soit remplir le rôle d'un viseur d'appareil photographique, soit permettre de vérifier en local les images enregistrées, à partir de la seule partie mobile équipée du capteur d'images.
Avantageusement, la partie destinée à être reliée à la ligne téléphonique est munie d'un écran de définition supérieure à la définition de l'écran de visée.
Ainsi on peut examiner une image, au moyen de la partie reliée à la ligne téléphonique, dans de meilleures conditions qu'avec la partie mobile équipée du capteur d'images seule.
L'appareil comporte en outre avantageusement des moyens, en sus de la ligne téléphonique, pour transmettre une image fixe depuis la partie mobile équipée du capteur d'images vers un appareil extérieur.
Ainsi on peut, si par exemple l'appareil extérieur est une imprimante, obtenir immédiatement une image sur papier.

On peut aussi transmettre l'image à un téléviseur, via un adaptateur. On peut aussi, si par exemple l'appareil extérieur est un ordinateur personnel, réaliser un traitement graphique, après quoi l'image peut être ramenée à l'appareil pour être transmise sur la ligne téléphonique.

Ces aspects de l'invention ainsi que d'autres aspects plus détaillés apparaîtront plus clairement grâce à la description suivante d'un mode de réalisation non limitatif.

La figure 1 est une vue en perspective d'un appareil selon l'invention.

La figure 2 est un schéma bloc d'éléments de circuits utilisés pour la mise en oeuvre de l'invention.

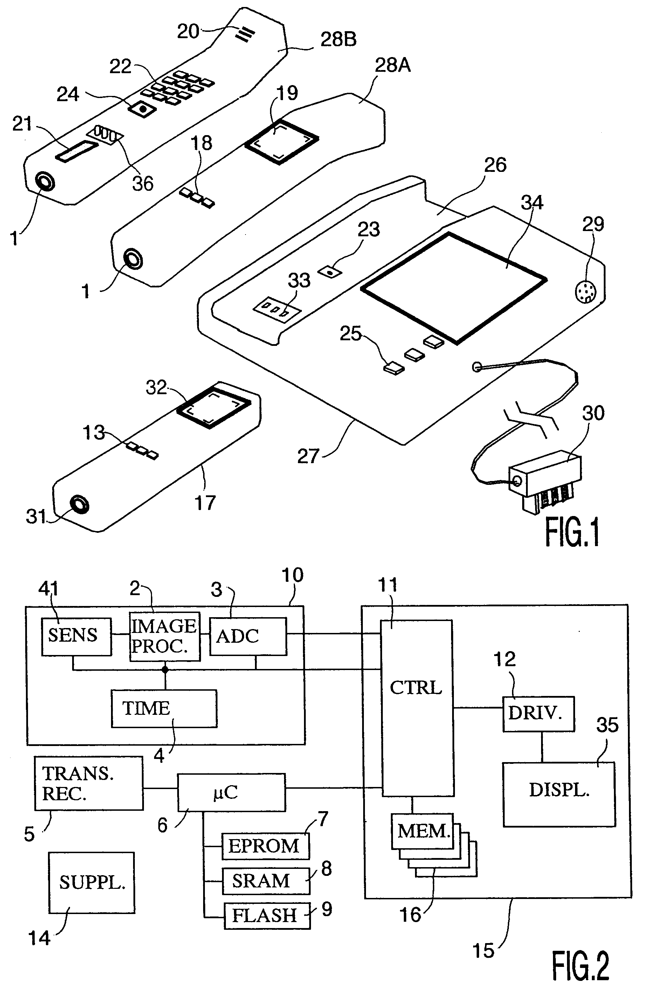

L'appareil représenté à la figure 1 est un appareil s'intégrant dans la gamme des postes téléphoniques classiques mais qui permet en outre la saisie, l'affichage et la mémorisation d'images fixes. Il comprend :
- une partie semi-fixe 27 appelée base, pour l'émission/réception de signaux, reliable à une ligne téléphonique par un connecteur mâle 30 adapté pour s'enficher dans un connecteur femelle normalisé (non représenté). Cette partie 27 contient aussi usuellement un interrupteur de prise de ligne ("crochet"), une sonnerie, une alimentation, etc,
- et une partie mobile 28 appelée combiné, munie de composants pour traiter la parole (notamment : microphone, écouteur) reliés électriquement à la base 27 pour finalement être reliés avec la ligne téléphonique, via cette base. La liaison entre le combiné et la base peut se faire par une liaison radio de manière connue dans les téléphones sans fil ("cordless"), ou tout simplement par un fil électrique traditionnel non représenté, la figure correspondant au cas de la liaison sans fil.
La partie détachable est alimentée par une batterie 14 qui est rechargée, de façon connue, lorsque la partie détachable est posée sur la base, au moyen d'une alimentation située dans la base et reliée au secteur. Le courant de charge de la batterie est amené via une interface de contact 33. Cette interface est munie de contacts galvaniques, qui entrent en liaison avec des contacts 36 du combiné 28B. La partie mobile 17 porte les mêmes contacts, non visibles sur la figure puisque situés dessous.

La base 27 comporte un logement en creux 26 destiné à recevoir le combiné 28 lorsque ce dernier est "raccroché". Des touches 25 permettent d'exercer des fonctions connues du téléphone (par exemple : "bis", "secret", "numéros abrégés", etc).
Sur la figure, le combiné 28 est représenté deux fois : sous la référence 28A, il est représenté orienté de façon à pouvoir être posé immédiatement dans le logement 26 de la base 27, et sous la référence 28B, il est représenté retourné par rapport à sa position référencée 28A.
Le combiné est muni d'un microphone placé derrière une grille 20, et d'un écouteur placé derrière une grille 21. Il comporte un clavier de touches 22 permettant notamment la numérotation d'appel. Ce clavier pourrait aussi être placé sur la base.

L'appareil comporte en outre un capteur d'images, installé dans une partie d'appareil, détachable de la base.
Dans une première forme de réalisation, ce capteur est intégré dans le combiné 28, qui joue donc le rôle de partie mobile équipée d'un capteur d'images.
Dans une deuxième forme de réalisation, le capteur est installé dans un boîtier spécifique, venant en sus d'un combiné traditionnel. Un tel boîtier est représenté en 17. Ce boîtier 17 peut être posé au repos dans un second logement de la base, non représenté pour ne pas encombrer la figure, analogue au logement 26, et dont la position ainsi que les dimensions sont facilement déterminées par l'homme du métier.

Le boîtier 17 (ou 28) comporte un capteur muni d'un objectif 31 (ou 1) derrière lequel est placée, à l'intérieur du boîtier 17 (ou 28), une matrice de diodes photosensibles, par exemple une matrice dite CCD, le tout constituant un capteur d'images qui fournit un signal d'image sous la forme d'un balayage de type télévision. L'ensemble objectif-matrice a un volume de quelques centimètres cubes. La matrice CCD est par exemple un modèle de 582×512 pixels. Une face du combiné 17 (ou 28A) est munie d'un viseur ou écran de visée 32 (ou 19) permettant de visualiser, entre autres, l'image saisie par le capteur. Un cadre sérigraphié sur la vitre de l'écran de visée permet de cerner l'image captée. L'utilisation du capteur d'images est analogue à celle d'un appareil photographique. Le boîtier comprend une mémoire d'images fixes, qui permet d'emmagasiner plusieurs images, par exemple dix images, organisées en 10 pages de 64 kilo-octets. La mise en mémoire d'une image captée à un instant donné, équivalente au déclenchement de l'obturateur dans le cas d'un appareil photographique, peut être commandée par l'utilisateur au moyen d'un des boutons de commande 13 (ou 18), qui sont accessibles à côté de l'écran de visée.
La base 27 est également munie d'un écran de visualisation 34 de plus grande taille et de définition plus élevée que celui de l'écran de visée, permettant de mieux voir les détails d'une image. Elle est munie de moyens pour mémoriser une image provenant de la partie détachable et l'afficher sur son écran. Elle possède en pratique plusieurs pages de mémoire, pour enregistrer plusieurs images fixes tirées tour à tour de la partie mobile équipée d'un capteur d'images, et des moyens pour tirer une image fixe de sa mémoire, au choix de l'usager, et pour l'afficher et/ou la transmettre sur la ligne téléphonique. Certaines des touches 25 peuvent être utilisées pour commander ces opérations. Tous les moyens ci-dessus peuvent être aisément créés par l'homme du métier lorsqu'on lui a donné la définition de leur fonction.

Sur la figure 2, les circuits électroniques, destinés à la prise de vue, de la partie détachable (combiné ou boîtier spécifique) comportent notamment un capteur 10, des moyens d'affichage 15, et des moyens de transmission infra-rouge 5.
Le capteur 10 comprend, comme une caméra de télévision miniature, un senseur 41 constitué par un objectif, déjà mentionné sous les références 1 ou 31, derrière lequel est placée une matrice CCD. Le signal d'image du senseur est fourni à un circuit de traitement 2, qui comporte un échantillonneur-bloqueur pour mémoriser l'information pixel entre la saisie de deux pixels, un contrôle de gain et un asservissement du courant des diodes photosensibles en fonction de la luminosité, ce circuit de traitement d'images fournissant un signal analogique à un convertisseur 3, qui le transforme en un signal vidéo numérique de, par exemple, quatre bits. Un générateur de rythme 4 fournit divers signaux d'horloge à ces circuits. On peut imaginer d'utiliser en outre un circuit de compression d'images du genre de ceux connus sous le nom de "JPEG" ou "ADPCM".
Les moyens d'affichage 15 situés dans la partie détachable comprennent notamment un contrôleur d'affichage 11 de type connu, couplé à une mémoire d'images 16, organisée par exemple en dix pages d'une image chacune. Le contrôleur 11 comporte un module d'accès direct ("DMA") permettant au flux binaire venant du module de saisie d'images 10 d'écrire de façon synchrone dans la page de la mémoire 16, par exemple au rythme de 13 images par seconde (chaque image vient remplacer la précédente). Un contrôleur d'écran 12 contrôle l'écran à cristaux liquides 35, qui correspond à l'écran de visée 19 ou 32 déjà mentionné. Ce contrôleur d'écran affiche en général une image fixe tirée de la page de mémoire courante. Il peut aussi, sur demande, afficher une des autres images contenues dans la mémoire d'images.
Ce système permet donc d'afficher sur l'écran l'image captée par le senseur, l'écran se comporte comme un viseur d'appareil photographique. L'utilisateur peut commander l'arrêt de l'écriture en mémoire de l'image courante, ce qui fournit une image figée sur l'écran. L'utilisateur peut aussi commander que l'écriture de l'image courante se fasse par la suite dans une autre page, cela veut dire que l'image figée précédente est conservée.
Pour envoyer une image depuis la partie détachable vers la base, une transmission 5 infra-rouge à haut débit est prévue. Les bits d'une image sont lus en série dans la mémoire d'image 16 et transmis, selon un mode de transmission série connu, par une diode électroluminescente émettrice dans la partie détachable ; une diode réceptrice dans la base reçoit le signal. La diode émettrice est représentée en 24 sur la figure 1, et la diode réceptrice en 23, au fond du logement 26. Ainsi lorsque la partie détachable 28 est posée sur la base, les diodes 23 et 24 sont en vis-à-vis. Il en est bien entendu de même dans le cas de la partie mobile 17. Il est clair que, plus simplement, des contacts galvaniques entre le mobile et la base (du genre des contacts 36 utilisés pour la charge de batterie) pourraient aussi bien être utilisés pour la transmission des données d'image, selon un mode de transmission série connu. Les images à envoyer depuis la partie détachable vers la base pourraient également, en variante, être transmises de façon connue au moyen d'une liaison radio.
Le transfert d'une image de la mémoire est commandé par un utilisateur au moyen d'un des boutons de commande 18 ou 13, accessibles sur le dessus du combiné 28 ou de la partie mobile 17, lorsque l'un d'eux est posé sur la base.
Un processeur logique 6 gère l'ensemble des fonctions de la partie détachable, y compris la transmission infra-rouge, en association avec ses propres mémoires 7,8,9.
La base comporte son propre contrôleur logique pour gérer ses propres fonctions. Ce contrôleur comporte plusieurs moyens différents pour envoyer une image, chacun étant connu en soi. Il comporte par exemple des moyens pour comprimer l'image (si elle ne l'a pas déjà été par la partie mobile équipée du capteur d'images) et la transmettre sous cette forme à un autre appareil de même type. Il comporte aussi des moyens semblables à ceux qui sont présents dans les transmetteurs téléphoniques de fac-similé communément appelés "FAX" ou "télécopieurs", et dont la procédure d'analyse d'une image est normalisée : les images sont analysées par lignes successives et le transfert de l'image vers un récepteur de télécopie standard s'effectue au cours d'un appel téléphonique normal. Chacun de ces moyens peut être utilisé pour transmettre une image, soit directement à partir du combiné, soit à partir de la mémoire de la base.
Bien entendu, le contrôleur de la base comporte aussi plusieurs moyens différents pour recevoir une image, chacun étant connu en soi. Il comporte par exemple des moyens pour recevoir, en provenance d'un autre appareil de même type, une image comprimée, la mémoriser, la décoder, l'afficher sur l'écran 34. Il comporte aussi des moyens semblables à ceux qui sont présents dans les récepteurs téléphoniques de fac-similé pour recevoir une image normalisée de type fac-similé, et la convertir vers le propre standard de codage de l'appareil, pour la mémoriser et/ou l'afficher sur l'écran.
La base comporte en outre un connecteur 29 et des moyens pour appliquer un signal d'image sur une ou plusieurs broches de ce connecteur, qui peut être connecté à un appareil périphérique local connu en soi, par exemple à une imprimante grâce à laquelle les images saisies par le capteur peuvent être imprimées sur place. Une ou plusieurs broches de ce connecteur peuvent aussi recevoir un signal d'image depuis un appareil périphérique pour l'enregistrer dans la mémoire de la base, où il pourra être relu pour une transmission sur la ligne téléphonique.

## Revendications

1. Appareil téléphonique, comprenant
- une partie pour l'émission/réception de signaux, destinée à être reliée à une ligne téléphonique,
- une partie, contenue dans un boîtier mobile, munie de moyens de traitement de signal audio, et communicant avec la partie destinée à être reliée à la ligne téléphonique,
- dans la partie destinée à être reliée à la ligne téléphonique, des moyens pour la transmission d'une image sur la ligne téléphonique,
- une partie mobile équipée d'un capteur d'images,
**caractérisé en ce que**
- la partie mobile équipée du capteur d'images comprend un convertisseur pour numériser le signal d'image du capteur, et une mémoire d'image pour mémoriser localement au moins une image numérisée complète,
- la partie destinée à être reliée à la ligne téléphonique est munie d'une liaison spécialisée avec la partie mobile équipée du capteur d'images pour la transmission différée d'une image fixe depuis la partie mobile équipée du capteur d'images vers la partie destinée à être reliée à la ligne téléphonique, et de moyens pour transmettre une telle image fixe sur la ligne téléphonique.

2. Appareil selon la revendication 1, **caractérisé en ce que** la partie mobile équipée du capteur d'images est contenue dans un second boîtier mobile, distinct de celui qui contient la partie munie de moyens de traitement de signal audio.

3. Appareil selon la revendication 1, **caractérisé en ce que** la mémoire d'image de la partie mobile équipée du capteur d'images a une capacité de plusieurs images.

4. Appareil selon la revendication 3, **caractérisé en ce qu'il** est muni de moyens pour choisir une image parmi plusieurs images dans la mémoire d'image de la partie mobile équipée du capteur d'images.

5. Appareil selon la revendication 1, **caractérisé en ce que** la partie destinée à être reliée à la ligne téléphonique est munie d'un écran et de moyens pour mémoriser et afficher sur cet écran une image fixe tirée, via la dite liaison spécialisée, de la mémoire d'image de la partie mobile équipée du capteur d'images.

6. Appareil selon la revendication 1, **caractérisé en ce que** la partie destinée à être reliée à la ligne téléphonique est munie de moyens pour transmettre via la ligne téléphonique une image, issue de la partie mobile équipée du capteur d'images, sous la forme standard d'un message de fac-similé.

7. Appareil selon la revendication 1, **caractérisé en ce que** la partie destinée à être reliée à la ligne téléphonique est munie de moyens pour mémoriser et afficher sur son écran une image fixe tirée, via la ligne téléphonique, de la mémoire d'image de la partie mobile, équipée du capteur d'images, d'un autre appareil téléphonique de même type.

8. Appareil selon la revendication 1, **caractérisé en ce que** la partie mobile équipée du capteur d'images est munie d'un écran de visée affichant en temps réel l'image saisie par le capteur.

9. Appareil selon la revendication 1, **caractérisé en ce que** la partie mobile équipée du capteur d'images est munie d'un écran de visée et de moyens pour y afficher une image mémorisée.

10. Appareil selon la revendication 1, **caractérisé en ce que** la partie mobile équipée du capteur d'images et la partie destinée à être reliée à la ligne téléphonique sont toutes deux munies d'un écran de visualisation, et l'écran de la partie destinée à être reliée à la ligne téléphonique possède une définition supérieure.

11. Appareil selon la revendication 1, **caractérisé en ce qu'il** comporte des moyens, en sus de la ligne téléphonique, pour transmettre une image fixe depuis la partie mobile équipée du capteur d'images vers un appareil extérieur.
